(19) Europäisches Patentamt
European Patent Office
Office européen des brevets

(11) EP 3 470 687 A1

(12) **EUROPÄISCHE PATENTANMELDUNG**

(43) Veröffentlichungstag:
**17.04.2019   Patentblatt 2019/16**

(21) Anmeldenummer: **17196178.2**

(22) Anmeldetag: **12.10.2017**

(51) Int Cl.:
**F15B 15/20** (2006.01)   **F15B 11/032** (2006.01)
**F15B 21/00** (2006.01)   **F15B 7/00** (2006.01)
**F15B 11/072** (2006.01)   **F16K 31/122** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Nova Werke AG**
**8307 Effretikon (CH)**

(72) Erfinder:
• **KRAUTER, Christoph**
  **78467 Konstanz (CH)**
• **KUNZ, Erich**
  **8132 Egg bei Zürich (CH)**
• **JUNG, Steffen**
  **9545 Wängi (CH)**

(74) Vertreter: **Frei Patent Attorneys**
**Frei Patentanwaltsbüro AG**
**Postfach**
**8032 Zürich (CH)**

(54) **PNEUMATISCHER VENTILAKTUATOR**

(57)    Pneumatisch aktivierbarer Ventilaktuator (1), aufweisend ein Gehäuse (2), einen Druckverstärker (10), einen Kraftverstärker (20) sowie eine Feder (30). Der Kraftverstärker (20) kann hydraulisch ausgebildet sein. Zudem ein flexibel verbaubares Gehäuse (2) für Ventilaktuatoren (1); ein Set aufweisend einen Ventilaktuator (1) und einem Satz von darin einbaubaren Federn (30) sowie Verwendungen für eine hydraulische Kraftverstärkung bzw. für einen pneumatisch aktivierbaren Ventilaktuator (1) mit einer hydraulischen Kraftverstärkung.

Figur 2a

EP 3 470 687 A1

**Beschreibung**

Die Erfindung bezieht sich auf das Gebiet der pneumatischen Aktuatoren, insbesondere der pneumatischen Ventilaktuatoren.

Aus dem Stand der Technik sind Aktuatoren bekannt, welche einen mittels Druckluft übertragenen Druck mit Hilfe eines Kolbens in eine Kraft wandeln, wodurch ein Ventil geöffnet bzw. geschlossen werden kann. Grundsätzlich unterscheidet man zwei Konstruktionen von pneumatisch gesteuerten Ventilen:

- bei ATO-Ventilen ("air-to-open") ist das Ventil ohne Beaufschlagung mit Druckluft geschlossen und kann durch Beaufschlagung geöffnet werden; und
- bei ATC-Ventilen ("air-to-close") ist das Ventil ohne Beaufschlagung geöffnet und kann durch Beaufschlagung geschlossen werden.

Handelsübliche Druckluftnetze werden zumeist mit einem Druck zwischen 5 bar und 8 bar betrieben. Gerade für Ventile in Hochdrucksystemen, in welchen mehrere tausend bar Druck herrschen können, werden Aktuatoren benötigt, welche hohe Kräfte erzeugen können. Herkömmlich werden dafür Aktuatoren mit einen entsprechend grossflächigen Kolben eigesetzt. Die Grössenproblematik wird in der Praxis zudem dadurch verschärft, dass oft mehrere Ventilaktuatoren benötigt werden, welche auf beschränktem Raum untergebracht werden müssen. Deswegen besteht ein Bedarf für pneumatische Aktuatoren, welche hohe Kräfte erzeugen können aber trotzdem relativ klein bzw. platzsparend realisiert werden können.

Es ist Aufgabe der Erfindung Aktuatoren, Gehäuse, Sets und Verwendungen mit verbesserten Eigenschaften zur Verfügung zu stellen. Eine verbesserte Eigenschaft kann zum Beispiel sein, einen Aktuator relativ klein realisieren und/oder relativ platzeffizient verbauen und/oder relativ kostengünstig produzieren zu können. Eine verbesserte Eigenschaft kann zum Beispiel sein, dass ein Aktuator eine grosse Kraft erzeugen kann und/oder mit seiner Verwendung der Verbrauch von Druckluft reduzieren werden kann.

Die Erfindung löst diese Aufgabe gemäss den unabhängigen Ansprüchen. Vorteilhafte Ausrührungsbeispiele sind in den abhängigen Ansprüchen beschrieben. Im folgendem werden die vorgeschlagenen Ausführungsformen zumeist anhand des Beispiels von Ventilaktuatoren, also Aktuatoren für Ventile, dargestellt; die vorgeschlagenen Aktuatoren können aber auch für weitere Zwecke eingesetzt werden, wie beispielsweise das Festklemmen und/oder das Bewegen von Maschinenteilen und/oder Vorrichtungen.

Ein pneumatisch betriebener Ventilaktuator weist ein Gehäuse mit einer Zuführungsöffnung zur Zuführung von Druckluft auf.

Der Ventilaktuator kann einen Druckverstärker aufweisen, mit welchem ein erster Druck in einen zweiten Druck übersetzt und dabei verstärkt werden kann. Dafür kann der Druckverstärker einen ersten Kolben und einen zweiten Kolben aufweisen. Der erste Kolben und der zweite Kolben können zum Beispiel mit einer Verstärker-Kolbenstange mechanisch miteinander gekoppelt sein. Insbesondere können der erste Kolben und der zweite Kolben an jeweils verschiedenen Enden einer Verstärker-Kolbenstange montiert sein. Eine Druckverstärkung mittels zweier miteinander gekoppelter Kolben kann dem Verhältnis der Flächen der beiden Kolben entsprechen.

Die Fläche des ersten Kolbens kann grösser als die Fläche des zweiten Kolbens sein. Zum Beispiel kann die Fläche des ersten Kolbens doppelt so gross wie die Fläche des zweitens Kolbens sein. Insbesondere kann die Fläche des ersten Kolbens mehr als fünfmal, zum Beispiel mehr als zehnmal, so gross sein wie die Fläche des zweiten Kolbens. Wenn die Fläche des ersten Kolbens beispielweise zehnmal so gross ist wie die Fläche des zweiten Kolbens, wird ein Druck mittels des ersten Kolbens und des zweiten Kolbens idealerweise um den Faktor zehn verstärkt.

Wenn dem Ventilaktuator durch die Zufuhröffnung Druckluft zugeführt wird, kann die Druckluft beispielweise auf einen ersten Kolben wirken. Sie kann zum Beispiel direkt oder indirekt auf den ersten Kolben drücken. Insbesondere kann die Zuführungsöffnung mit dem ersten Kolben - zum Beispiel mittels einer Leitung verbunden sein. Der erste Druck kann beispielsweise der von der Druckluft bereitgestellte Druck sein.

Ferner kann der Ventilaktuator einen Kraftverstärker aufweisen, mit welchem eine zweite Kraft in eine dritte Kraft übersetzt und dabei verstärkt werden kann. Dafür kann der Kraftverstärker einen zweiten Kolben und einen dritten Kolben aufweisen. Der zweite und der dritte Kolben können zum Beispiel hydraulisch miteinander gekoppelt sein, so dass die Kraft hydraulisch übertragen wird. In diesem Fall spricht man von einem hydraulischen Kraftverstärker. Der Kraftverstärker könnte auch als pneumatischer Kraftverstärker, d.h. in welchem die Kraft pneumatisch übertragen wird, ausgebildet sein. Hydraulische Kraftverstärker haben den Vorteil, dass Hydraulikflüssigkeiten, wie z.B. Öl, im Wesentlichen nicht kompressibel sind, und durch ihre Verwendung eine direktere Ansteuerung und/oder relativ starre Ansteuerung möglich sein können. Eine Kraftverstärkung mittels zweier, miteinander gekoppelter Kolben kann in etwa dem Verhältnis der Flächen der beiden Kolben entsprechen.

Die Fläche des dritten Kolbens kann grösser als die Fläche des zweiten Kolbens sein. Zum Beispiel kann die Fläche des dritten Kolbens doppelt so gross wie die Fläche des zweitens Kolbens sein. Insbesondere kann die Fläche des dritten Kolbens mehr als fünfmal, zum Beispiel mehr als zehnmal, so gross sein wie die Fläche des zweiten Kolbens. Wenn die Fläche des dritten Kolbens beispielweise zehnmal so gross ist wie die Fläche des zweiten Kolbens, wird eine Kraft mittels des zweiten Kolbens und des drittens Kolbens idealerweise um den Faktor zehn verstärkt.

Der dritte Kolben kann mit einer Kolbenstange gekoppelt sein. Insbesondere kann der dritte Kolben mechanisch mit der Kolbenstange gekoppelt sein. Die Kolbenstange wiederum kann zum Beispiel mit einem Ventil gekoppelt sein, so dass sich das Ventil öffnet bzw. schliesst, wenn die Kolbenstange in eine bestimmte Richtung bewegt wird.

Der dritte Kolben kann mittels einer Feder vorgespannt sein. Die Feder kann beispielsweise die Kraft ausüben, mit welcher das Ventil geschlossen (ATO-Ventil) bzw. offen (ATC-Ventil) gehalten wird, wenn der Ventilaktuator nicht mit Druckluft beaufschlagt ist. Um das Ventil zu öffnen (ATO-Ventil) bzw. zu schliessen (ATC-Ventil), muss der Ventilaktuator zumindest die Federkraft der Feder überwinden. Insbesondere kann der dritte Kolben mit einer Feder vorgespannt sein, welche über eine, an den dritten Kolben gekoppelte, Kolbenstange ein Ventil geschlossen (ATO-Ventil) bzw. geöffnet (ATC-Ventil) hält. Die Feder kann so angeordnet sein, dass der Aktuator auch bei Ausfall/Undichtheit der Druckluft eine definierte Position einnimmt. Insbesondere kann der Aktuator eigensicher ausgebildet sein.

In einigen Ausführungsbeispielen wird

- der Druck zugeführter Druckluft mittels eines Druckverstärkers verstärkt;
- der so verstärkte Druck mittels eines Kolbens, zum Beispiel eines zweiten Kolbens, in eine Kraft gewandelt; und
- diese Kraft mittels eines hydraulischen Kraftverstärkers verstärkt.

Durch eine solche, doppelte Verstärkung kann auch mit einem relativ kleinen Aktuator eine vergleichsweise grosse Kraft erreicht werden, selbst bei nur geringen Antriebsdruck. Eine verringerte Grösse kann den Einbau des Aktuators vereinfachen und kann den Bau leichterer Aktuatoren ermöglichen.

Zudem kann durch die doppelte Verstärkung die Konstruktion von Aktuatoren mit einem relativ steifen Antrieb ermöglicht werden, wodurch die Reaktionszeit des Aktuators verkürzt werden kann. Zum Beispiel können mit einem doppelt verstärkenden Aktuator hohe Schaltgeschwindigkeiten, von z.B. bis zu 0,2 Sekunden, erreicht werden. Die doppelte Verstärkung kann es zudem erlauben Aktuatoren zu konstruieren, welche weniger Druckluft verbrauchen; z. B. um bis zu 80% weniger Druckluft als bisherige Aktuatoren verbrauchen.

In einigen Ausführungsformen umfasst der Ventilaktuator ein Gehäuse mit einer Zuführungsöffnung zur Zuführung von Druckluft; einen Druckverstärker mit einem ersten Kolben und einem zweiten Kolben; einen Kraftverstärker mit dem zweiten Kolben und einem dritten Kolben sowie eine, den dritten Kolben vorspannende Feder. Dabei kann der Aktuator so ausgebildet sein, dass wenn Druckluft, z. B. durch die Zuführungsöffnung, zugeführt wird, die Druckluft auf den ersten Kolben wirkt; der Druckverstärker Druck von dem ersten Kolben auf den zweiten Kolben überträgt und dabei verstärkt; der Kraftverstärker Kraft von dem zweiten Kolben auf den dritten Kolben überträgt und dabei verstärkt; und die verstärkte Kraft die Vorspannungskraft der Feder überwindet, so dass der dritte Kolben bewegt wird.

In einigen Ausführungsformen weist der Ventilaktuator einen ersten Kolben und einen dritten Kolben auf, wobei die Fläche des ersten Kolbens und die Fläche des dritten Kolbens im Wesentlichen gleich gross sind. Insbesondere können die Fläche des ersten Kolbens und die Fläche des dritten Kolbens gleich gross sein.

In einigen Ausführungsformen ist der Kraftverstärker als hydraulischer Kraftverstärker ausgebildet; d.h. die Kraft wird hydraulisch übertragen und verstärkt. Insbesondere können der zweite Kolben und der dritte Kolben hydraulisch miteinander gekoppelt sein.

In einigen Ausführungsformen umfasst der Ventilaktuator eine Leitung zur Aufnahme einer Hydraulikflüssigkeit. Die Leitung kann beispielsweise zwischen dem zweiten Kolben und dem dritten Kolben angeordnet sein. Über die Hydraulikflüssigkeit in dieser Leitung können der zweite Kolben und der dritte Kolben hydraulisch miteinander gekoppelt sein.

In einigen Ausführungsformen umfasst der Ventilaktuator eine, an den dritten Kolben gekoppelte Kolbenstange. Über diese Kolbenstange kann Kraft von dem dritten Kolben übertragen werden. Die Kolbenstange kann zum Beispiel mit einem Ventil gekoppelt sein, so dass sich das Ventil bewegt - insbesondere öffnet bzw. schliesst - wenn die Kolbenstange in eine bestimmte Richtung bewegt wird.

In einigen Ausführungsformen ist die Vorspannung der Feder mittels eines Vorspannungselements justierbar, also von einem ersten Vorspannungswert auf einen zweiten Vorspannungswert änderbar. Insbesondere kann die Feder mittels eines Vorspannungselements vorspannbar sein, also die Feder von einem nichtvorgespannten Zustand in einen vorgespannten Zustand gebracht werden. Ein Vorspannelement kann zum Beispiel als Schraube ausgebildet sein. Es können mehr als ein Vorspannelement vorhanden sein, also zum Beispiel zwei oder vier Vorspannelemente, wodurch die Spannung gleichmässiger verteilt werden kann. Vorspannelemente können es ermöglichen, dass die Feder zunächst ohne oder nur mit geringer Vorspannung in den Aktuator eingebaut werden kann und erst später - z. B. entsprechend der Einsatzanforderungen - vorgespannt werden kann. Dadurch kann z.B. die Flexibilität/Einstellbarkeit des Aktuators erhöht werden und/oder die Produktion des Aktuators vereinfacht werden. Durch die Verwendung von verschiedenen Federhärten kann eine flexible Anpassung an eine gewünscht Schliess- oder Öffnungskraft möglich sein.

In einigen Ausführungsformen umfasst der Ventilaktuator eine Drossel zur Justierung der Geschwindigkeit einer Kraftübertragung auf den dritten Kolben. Insbesondere kann die Drossel zur Justierung der Geschwindigkeit einer hydraulischen Kraftübertragung auf den dritten Kolben eingerichtet sein. Die Drossel kann an und/oder in einer Hydraulikflüssigkeit führenden Leitung angeordnet sein. Eine Justierung der Drossel kann über eine Drehung vornehmbar sein, z. B. durch eine, von ausserhalb des Aktuators zugängliche Schraubausnehmung, welche z. B. in Form gängiger Kopf-Anschlussformen für Schraubendreher (Schlitz, Kreuz, Innensechskant [Inbus], Innenfünfkant, Innensechsrund [Torx], etc.) ausgebildet sein kann. Eine Drossel kann zur stufenlosen Einstellung der Hubgeschwindigkeit des dritten Kolbens und/oder des Ventils eingerichtet sein.

In einigen Ausführungsformen umfasst der Ventilaktuator eine Endlagendämpfung, also eine Einrichtung zur Abbremsung eines Kolbens vor dem Erreichen einer Endlage. Dadurch kann ein schnelles Aufschlagen des Kolbens und somit Beschädigungen an dem Kolben und/oder diesen umgebenden und/oder mit diesem wirkungsverbundenen Teilen vermieden werden. Dadurch kann Verschleiss vorgebeugt und die Lebensdauer der betroffenen Teile verlängert werden. Der Endlagendämpfer kann zum Beispiel dazu eingerichtet sein, das Aufschlagen eines Ventils auf einen Ventilsitz abzudämpfen. Die Endlagendämpfung kann fest voreingestellt oder justierbar sein. Die Endlagendämpfung kann beispielweise dazu eingerichtet sein, den dritten Kolben abzubremsen. Die Endlagendämpfung kann an einer Endlage des dritten Kolbens angeordnet sein. Die Endlagendämpfung kann als Teil eines hydraulischen Systems, insbesondere als Teil eines hydraulischen Kraftverstärkers, ausgebildet sein. Eine Endlagendämpfung kann zum Beispiel eingesetzt werden, wenn das Ventil besonders schnell oder besonders langsam öffnen bzw. schliessen soll. Mittels einer Endlagendämpfung können zudem Variationen in dem, den Aktuator antreibenden Druck ausgeglichen werden. Durch den Einsatz einer Endlagendämpfung kann es möglich sein, einen Aktuator mit hohen Schaltgeschwindigkeit zu konstruieren und trotzdem einen Endanschlages und/oder einen Ventilsitzes wenig zu belasten.

In einigen Ausführungsformen umfasst der Ventilaktuator einen Sensor. Der Sensor kann dazu eingerichtet sein, Informationen bezüglich einer Position und/oder einer Spannung der Feder und/oder einer Position des dritten Kolbens und/oder einer Position einer Kolbenstange zu erfassen. Die erfassten Informationen können dazu eingerichtet sein, Rückschlüsse auf die Position und/oder Spannung der Feder und/oder die Position des dritten Kolbens und/oder einer Position einer Kolbenstange zu erlauben. Die erfassten Informationen können zeitlich und/oder räumlich diskret und/oder kontinuierlich sein. Insbesondere kann der Sensor zur Endlagenabfrage eingerichtet sein. Wenn der Aktuator ein Ventil steuert, kann so der Sensor z.B. eingerichtet sein Informationen zu erfassen, welche Rückschlüsse darauf erlauben, ob das Ventil geöffnet (Endlage bei ATO-Ventilen) oder geschlossen (Endlage bei ATC-Ventilen) ist. Dadurch kann beispielsweise eine schnelle und/oder eine einfache und/oder präzise Abfrage der Ventilstellung möglich sein. Mit einer entsprechend eingerichteten Verbindung kann dadurch eine Ferndiagnose und/oder Fernüberwachung möglich sein.

Ein Sensor oder zumindest Teile des Sensors können an der Feder und/oder an dem dritten Kolben und/oder an damit wirkverbundenen Teilen angeordnet sein. Zum Beispiel kann, wenn der dritte Kolben mit einer Kolbenstange gekoppelt ist, der Sensor oder zumindest Teile des Sensors in und/oder an der Kolbenstange angeordnet sein.

Der Aktuator kann zum Beispiel einen induktiven Sensor aufweisen, also einen Sensor, welcher eine Spule umfasst und eine Änderung eines induzierten Feldes misst. Zum Beispiel kann ein Magnet in dem dritten Kolben oder in einer, mit dem dritten Kolben gekoppelten Kolbenstange und die Spule in einem, zur Endlage des Magneten proximalen Teil des Gehäuses des Aktuators angeordnet sein. Wenn der Magnet in seine Endlage geschoben wird, ändert sich das Magnetfeld und somit die Induktivität der Spule. Die geänderte Induktivität der Spule kann in diesem Fall also anzeigen, dass sich der Magnet in seiner Endlage befindet.

Der Aktuator kann z.B. einen als Mikroschalter ausgebildeten Sensor aufweisen.

Der Aktuator kann einen oder mehrere - zum Beispiel zwei oder mehr - Sensoren aufweisen. Zwei oder mehr Sensoren können dazu geeignet sein sich gegenseitig (z. B. auf Plausibilität) zu kontrollieren. Zum Beispiel kann der Aktuator zwei Sensoren aufweisen, welche beide dazu eingerichtet sind das Erreichen einer Endlage z.B. des dritten Kolbens zu bestimmen. Die Sensoren können sich gegenseitig kontrollieren: zeigen die beiden Sensoren voneinander abweichende Informationen an, muss einer der beiden Sensoren defekt sein und der Aktuator überprüft werden.

In einigen Ausführungsformen umfasst der Ventilaktuator einen Transmitter. Der Transmitter kann dazu eingerichtet sein, von einem Sensor erfasste Informationen zu übermitteln. Die Übermittlung kann drahtlos erfolgen, z.B. über eine Spule (RFID), ein WLAN-Modul und/oder ein Bluetooth-Modul.

Die Erfindung betrifft ferner ein System aufweisend einen Aktuator, einen Sensor zur Erfassung mindestens einer Information über den Aktuator, einen Transmitter sowie ein Interface. Eine von dem Sensor erfasste Information über den Aktuator - zum Beispiel eine Endlagenabfrage - kann über den Transmitter übertragen werden. Ein Anwender kann über das Interface, welches zum Beispiel als Software ausgebildet sein kann, die erfasste Information abrufen. So kann sich ein Anwender z.B. über eine Anwendungssoftware online darüber informieren, ob ein bestimmtes Ventil geöffnet oder geschlossen ist. Der Aktuator kann zudem einen Empfänger aufweisen und die mindestens eine Information auf eine Anfrage hin erfasst und/oder übermittelt werden.

In einigen Ausführungsformen ist der erste Kolben gleichläufig zum zweiten Kolben angeordnet. Mit anderen Worten: die Kolben sind so angeordnet, dass die Bewegungsachse des ersten Kolbens parallel zu der Bewegungsachse des zweiten Kolbens ist und dass - wenn die Kolben durch die Zuführung von Druckluft von einer jeweiligen Anfangslage in eine jeweilige Endlage bewegt werden - der erste Kolben in eine Richtung und der zweite Kolben in dieselbe Richtung bewegt werden. Insbesondere können der erste Kolben und der zweite Kolben durch eine gemeinsame, insbesondere eine an beiden Kolben fest montierte, Kolbenstange miteinander gekoppelt sein. Die Koppelung kann eine Steckung und/oder Klemmung, beispielsweise mittels eines O-Rings, aufweisen. Zum Beispiel kann die Koppelung als eine Steckung und/oder Klemmung realisiert sein.

In einigen Ausführungsformen ist der erste Kolben gegenläufig zum dritten Kolben angeordnet. Mit anderen Worten: die Kolben sind so angeordnet, dass die Bewegungsachse des ersten Kolbens parallel zu der Bewegungsachse des dritten Kolbens ist und dass - wenn die Kolben durch die Zuführung von Druckluft von einer jeweiligen Anfangslage in eine jeweilige Endlage bewegt werden - der erste Kolben in eine Richtung und der dritte Kolben in die dazu entgegengesetzte Richtung bewegt werden.

In einigen Ausführungsformen ist der zweite Kolben gegenläufig zum dritten Kolben angeordnet. Insbesondere können der zweite Kolben und der dritte Kolben über eine, Hydraulikflüssigkeit führende Leitung hydraulisch miteinander gekoppelt sein, wobei die Leitung eine Umlenkung aufweist. Die Umlenkung kann z. B. als Umlenkung um 180° ausgebildet sein. Dadurch kann es möglich sein die Kräfte so zu übertragen, dass der zweite Kolben zu dem dritten Kolben gegenläufig ist. Eine Umlenkung um im Wesentlichen 180° kann eine kompakte Bauform des Aktuators ermöglichen. Der Ventilaktuator kann derart ausgebildet sein, dass der dritte Kolben durch einen, zu dem dritten Kolben gegenläufigen zweiten Kolben über eine Umlenkung, insbesondere über eine hydraulische Umlenkung, antreibbar ist.

In einigen Ausführungsformen sind der erste Kolben in einem ersten Zylinder, der zweite Kolben in einem zweiten Zylinder und der dritte Kolben in einem dritten Zylinder angeordnet.

Zwei Zylinder sind zueinander parallel resp. koaxial angeordnet, wenn die beiden Zylinder - zumindest im Wesentlichen - rotationssymmetrisch ausgebildet sind, und die Symmetrieachsen der beiden Zylinder zueinander parallel resp. koaxial angeordnet sind.

In einigen Ausführungsformen sind der erste Zylinder und der zweite Zylinder zueinander koaxial angeordnet und der dritte Zylinder zu den ersten beiden Zylindern zueinander parallel aber nicht koaxial angeordnet. Der Gehäuseteil, in welchem der erste und der zweite Zylinder angeordnet sind, soll im Folgenden erste Zylindereinheit genannt werden; der Gehäuseteil, in welchem der dritte Zylinder angeordnet ist, soll im Folgenden zweite Zylindereinheit genannt werden. Die beiden Zylindereinheiten können - in Bewegungsrichtung der drei Kolben gesehen - nebeneinander in dem Gehäuse des Aktuators angeordnet sein. Insbesondere kann es eine, zu den Symmetrieachsen der drei Zylinder normale Ebene geben, welche sowohl den dritten Zylinder der zweiten Zylindereinheit als auch einen der beiden koaxialen Zylinder der ersten Zylindereinheit schneidet. Zum Beispiel können der erste Zylinder und der zweite Zylinder - in Bewegungsrichtung der drei Kolben gesehen - übereinander und der dritte Zylinder daneben angeordnet sein. Die beiden Zylindereinheiten können in zumindest einem - zur Bewegungsrichtung der drei Kolben normalen - Querschnitt eine zueinander ähnliche Form aufweisen. Die beiden Zylindereinheiten zusammen können in zumindest einem - zur Bewegungsrichtung der drei Kolben normalen - Querschnitt eine nicht rotationssymmetrische Form aufweisen.

In einigen Ausführungsformen weist der Aktuator mindestens einen Querschnitt auf, in welchem das kleinste Rechteck, welches den Querschnitt des Aktuators umschreibt, ein Seitenverhältnis von ungefähr 2 zu 1, insbesondere zwischen 1.8 zu 1 und 2.2 zu 1, aufweist. Der Querschnitt kann zum Beispiel durch eine, zu der Bewegungsrichtung des ersten, zweiten und/oder dritten Kolbens normale Ebene verlaufen.

In einigen Ausführungsformen ist das Gehäuse des Aktuators nicht im Wesentlichen rotationssymmetrisch ausgebildet.

In einigen Ausführungsformen weist der kleinste, das Gehäuse des Aktuators umfassende Quader ein kleineres Volumen auf als der kleinste das Gehäuse des Aktuators umfassende Rundzylinder. Insbesondere kann das Volumen des Quaders maximal 90%, insbesondere maximal 80%, des Volumens des Rundzylinders aufweisen.

In einigen Ausführungsformen ist das Gehäuse des Aktuators im Wesentlichen quaderförmig ausgebildet. Zumindest Teile des Gehäuses können z. B. durch ein Strangpressverfahren produziert werden. Alternativ kann die Herstellung durch Druckguss, Schmieden, Zerspanen oder eine Kombination solcher Verfahren erfolgen.

In einigen Ausführungsformen füllt das Gehäuse des Aktuators (inklusive seines Inneren) das Volumen eines kleinsten das Gehäuse umschreibenden Quaders zu mehr als 80%, insbesondere zu mehr als 90%, aus.

In einigen Ausführungsformen ist der Aktuator nicht rotationsymmetrisch ausgebildet und dazu geeignet, mit einem Freiheitsgrad einer Drehung um eine Achse, insbesondere einer stufenlosen Drehung um bis zu 360° um diese Achse, an einem Ventil oder einem sonstigen Bauteil montiert zu werden. Dadurch ist es möglich, bei der Montage die Orientierung der Asymmetrie des Gehäuses frei zu wählen, wodurch zum Beispiel eine platzsparende und/oder der Umgebung angepasste Montage des Aktuators möglich sein kann. Zum Beispiel kann der Aktuator eine rotationsfähige Schnittstelle aufweisen, an welcher der Aktuator an einem Ventil oder sonstigen Bauteil in einem beliebigen Drehwinkel (bezüglich einer Drehung um die Rotationsachse der Schnittstelle) montiert werden kann. Die rotationsfähige Schnittstelle kann zum Beispiel eine rotationsymmetrische Öffnung für eine rotationssymmetrische und/oder rotationsfähige Kolbenstange aufweisen.

In einigen Ausführungsformen weist der Aktuator eine Schnittstelle auf, an welcher der Aktuator an ein anderes Bauteil (wie z. B. ein Ventil) angebracht werden kann. Die Schnittstelle kann z.B. als Bonnet ausgebildet sein. Die Schnittstelle kann so ausgebildet sein, dass der Aktuator nach dem Anbringen drehbar ist. Insbesondere kann der Aktuator nach dem Anbringen um 360°, um eine, von der Schnittstelle definierte Achse, drehbar sein. Der Aktuator kann einen Feststellmechanismus aufweisen, welcher dazu eingerichtet sein kann, aktiviert zu werden und, wenn der Aktuator an der Schnittstelle drehbar an einem anderen Bauteil angebracht ist, nach Aktivierung eine Drehung zu verhindern. Der Feststellmechanismus kann beispielsweise dazu eingerichtet sein, eine Drehung formschlüssig und/oder kraftschlüssig zu blockieren. Der Feststellmechanismus kann beispielweise eine oder mehrere Schrauben aufweisen; die Schrauben können dazu eingerichtet sein, die Schnittstelle direkt oder indirekt einzuklemmen. Die Schnittstelle kann beispielsweise als Bonnet ausgebildet sein.

In einigen Ausführungsformen weist der Aktuator eine Abtropfkante auf. Die Abtropfkante kann beispielsweise dazu eingerichtet sein, Kondenswasser oder Regenwasser gezielt abzutropfen. Die Abtropfkante kann z.B. ringförmig ausgebildet sein. Die Abtropfkante kann beispielsweise als ringförmig in das Gehäuse eingefräste Nut ausgebildet sein. Die Abtropfkante kann z.B. um ein Bonnet verlaufen. Die Abtropfkante kann z.B. an einer Unterseite des Gehäuses angeordnet sein. Die Abtropfkante kann z.B. so angeordnet sein, dass sie verhindert, dass Wasser in eine Unterseite des Gehäuses und/oder ein Bonnet läuft.

Das Quader-Restvolumen eines Körpers sei im Folgenden definiert als das Volumen eines kleinsten den Körper umfassenden Quaders abzüglich des von dem Körper (inklusive seines Inneren) eingenommenen Volumens.

In einigen Ausführungsformen ist das Quader-Restvolumen des Aktuators weniger als 20%, insbesondere weniger als 10%, des von dem Aktuator (inklusive seines Inneren) eingenommenen Volumens. Ein geringes Quader-Restvolumen kann eine platzeffiziente Montage eines oder mehrerer Aktuatoren begünstigen. So können zum Beispiel zwei oder mehr Aktuatoren platzsparend nebeneinander, beispielsweise auf einer gemeinsamen Schiene, montiert werden.

Je nach Anwendung werden verschieden starke Federn für die Ventilsteuerung benötigt. Eine stärkere Feder bedingt aber eine grössere Kraft und - bei den bekannten Kolben-Ventilaktuatoren - somit einen grösseren Ventilaktuator. Gemäss den zuvor beschriebenen Ausführungsformen mit doppelter Verstärkung ist es möglich, auch Aktuatoren für Ventile mit hohem Druck relativ kompakt zu bauen. Für einen spezifischen Einsatz kann die jeweils passende Feder ausgesucht und eingebaut werden.

Die Erfindung betrifft zudem ein Set bestehend aus einem ersten Ventilaktuator und einem zweiten Ventilaktuator, welche beide gemäss einer gemeinsamen, zuvor beschriebenen Bauweise ausgebildet sind, wobei der erste und der zweite Ventilaktuator Federn mit unterschiedlichen Federkonstanten aufweisen.

Durch den Einbau der geeigneten Feder kann ein Aktuator an den entsprechenden Einsatzzweck angepasst werden. Dadurch können Aktuatoren für verschiedene Einsatzzwecke sehr viele Gleichteile aufweisen, wodurch z.B. die Produktionskosten der Aktuatoren reduziert werden können. Z.B. können zwei Aktuatoren eines Sets 90% oder mehr gleiche Teile aufweisen. Bei den beschriebenen Aktuatoren mit doppelter Verstärkung kann, durch den Einbau verschiedener Federn in ein einziges Aktuator-Design (insbesondere mit einer einzigen Aktuator-Grösse), ein breiteres Spektrum von Applikationen abdeckbar sein, als mit herkömmlichen Aktuator-Designs.

Die Erfindung betrifft zudem ein Gehäuse für einen Ventilaktuator, wobei das Gehäuse sowohl in einem Ventilaktuator für ein air-to-open ("ATO") Ventil als auch in einem Ventilaktuator für ein air-to-close ("ATC") Ventil verbaut werden kann. Das Gehäuse kann insbesondere dazu eingerichtet sein, in einen der zuvor beschriebenen Ventilaktuatoren verbaut zu werden.

In einigen Ausführungsformen umfasst das Gehäuse

- eine Zuführungsöffnung zur Zuführung von Druckluft;
- einen - mit der Zufuhröffnung verbundenen - ersten Zylinder zur Aufnahmen eines ersten Kolbens;
- einen - mit dem ersten Zylinder verbundenen und optional zu dem ersten Zylinder koaxial angeordneten - zweiten Zylinder zur Aufnahme eines zweiten Kolbens,
- eine - mit dem zweiten Zylinder verbundene - Leitung zur Aufnahme eines hydraulischen und/oder pneumatischen Mediums,
- einen - mit der Leitung verbundenen - dritten Zylinder zur Aufnahmen eines dritten Kolbens (und optional zur Aufnahme einer den dritten Kolben vorspannenden Feder), und/oder
- zwei - mit dem dritten Zylinder verbundenen - Ausgangsöffnungen, welche z. B. dazu geeignet sein können, eine an dem dritten Kolben gekoppelte Kolbenstange (welche z. B. mechanisch mit einem Ventil gekoppelt sein kann) aufzunehmen.

Die Ausgangsöffnungen können an entgegengesetzten Enden des Gehäuses und/oder des dritten Zylinder gelegenen sein. Eine Kolbenstange kann durch eine oder beide Austrittsöffnungen geführt sein. Wenn die Kolbenstange nur durch eine Austrittsöffnung geführt ist, kann die andere Austrittsöffnung mit einem anderen Bauteil (z.B. einer Platte) verschlossen sein.

Die Kraftrichtung - also die Richtung in welche der Aktuator bei Druckluftzufuhr (z.B. über eine Kolbenstange) Kraft ausübt - kann die Richtung sein, in welcher die Hydraulikflüssigkeit auf den dritten Kolben drückt. Die Feder kann so angeordnet sein, dass sie in die zur Kraftrichtung entgegengesetzte Richtung auf den dritten Kolben wirkt. Der Aktuator kann so ausgestaltet sein, dass der dritte Kolben erst gehoben wird wenn die, von der Hydraulikflüssigkeit auf den dritten Kolben ausgeübte Kraft die Federkraft übersteigt. Dadurch kann es möglich sein, ein Ventil zu öffnen (ATO-Ventile) oder zu schliessen (ATC-Ventile). Wenn z. B. eine Kolbenstange derart mit dem dritten Kolben gekoppelt ist, dass sie sich mit dem dritten Kolben in dieselbe Richtung (wie der dritte Kolben) bewegt, kann die Kolbenstange in der einen Richtung ein Ventil heben und/oder in der anderen Richtung ein Ventil senken; d.h. der Aktuator kann ein ATO-Ventil und/oder ein ATC-Ventil ansteuern, abhängig davon auf welcher Seite das Ventil angekoppelt ist. Ein flexibel verwendbares Gehäuse kann es erlauben das Gehäuse und somit den Aktuator preisgünstig zu produzieren. Zum Beispiel kann aus demselben Gehäuse und mit denselben Teilen, lediglich unter Verwendung einer verschieden ausgebildeten Kolbenstange und/oder einer verschieden starken Feder, sowohl ein ATO- wie auch ein ATC-Aktuator produziert werden.

Die Erfindung betrifft zudem die Verwendung einer hydraulischen Kraftverstärkung in einem pneumatisch aktivierbaren Ventilaktuator. Wie z.B. oben beschrieben, kann in einem Druckluft-betriebenen Aktuator eine hydraulische Übersetzung zur Kraftverstärkung verwendet werden.

In einigen Verwendungsbeispielen wird ein Ventilaktuator mit Wasserstoff-haltiger Druckluft, insbesondere mit Druckluft mit mindestens 5% Wasserstoff-Anteil, betrieben. Zum Beispiel wird bei Wasserstoff-Tankstellen als Energieträger für Ventile oft der vorhandene Wasserstoff genutzt. Bei bekannten Ventilaktuatoren kann der Wasserstoff mit einer Feder in Kontakt kommen, welche meist aus Stahl hergestellt ist und entsprechend anfällig sein kann. Durch eine luftdichte Trennung von Druckluftzufuhr und Feder - etwa durch die Zwischenschaltung einer hydraulischen Übersetzung - kann der Wasserstoff der Druckluft von der Feder fern gehalten werden und so eine nachteilige Reaktion und Degradation des Federmaterials verhindert werden.

In einigen Varianten wird ein pneumatisch aktivierbarer Ventilaktuator mit einer hydraulischen Kraftverstärkung für die Schaltung eines direktgesteuerten Ventils verwendet. Bei Hochdrucksystemen musste der Aktuator bislang entsprechend gross dimensioniert sein oder das Ventil musste eine Pilotfunktion aufweisen (also mehrstufig ausgebildet sein). Durch die vorgeschlagene Verwendung einer hydraulischen Verstärkung ist es nun möglich auch ein direktgesteuerten Ventil (also ohne Pilotfunktion) in Hochdrucksystemen mit einem relativ kleinen Aktuator zu steuern. Dadurch kann die Bauweise des Ventils deutlich vereinfacht werden und/oder die Produktionskosten für das Ventil erheblich gesenkt werden.

In einigen Varianten wird ein pneumatisch aktivierbarer Ventilaktuator mit einer hydraulischen Verstärkung zur Steuerung eines direktgesteuerten Ventils in einem System mit einem Druck von *mindestens 700 bar,* insbesondere *mindestens 1'000 bar,* weiter insbesondere *mindestens 2'000 bar,* verwendet, wobei der Ventilaktuator mit Druckluft mit einem Druck von *höchstens 10 bar,* insbesondere von *höchstens 8 bar,* weiter insbesondere von *höchstens 4 bar,* betrieben wird.

Im Folgenden wird der Erfindungsgegenstand anhand von Ausführungsbeispielen, welche in den beiliegenden Zeichnungen dargestellt sind, näher erläutert. Es zeigen jeweils schematisch:

| | |
|---|---|
| Figur 1 | einen Aktuator; |
| Figur 2a, 2b | je einen Querschnitt durch einen Aktuator für ein ATO-Ventil; |
| Figur 3a, 3b | je einen Querschnitt durch einen Aktuator für ein ATC-Ventil; |
| Figur 4 | drei miteinander verbundene Aktuatoren; |
| Figur 5a, 5b | einen Aktuator mit drehbaren und fixierbaren Bonnet; und |
| Figur 6 | einen Aktuator mit Sensor. |

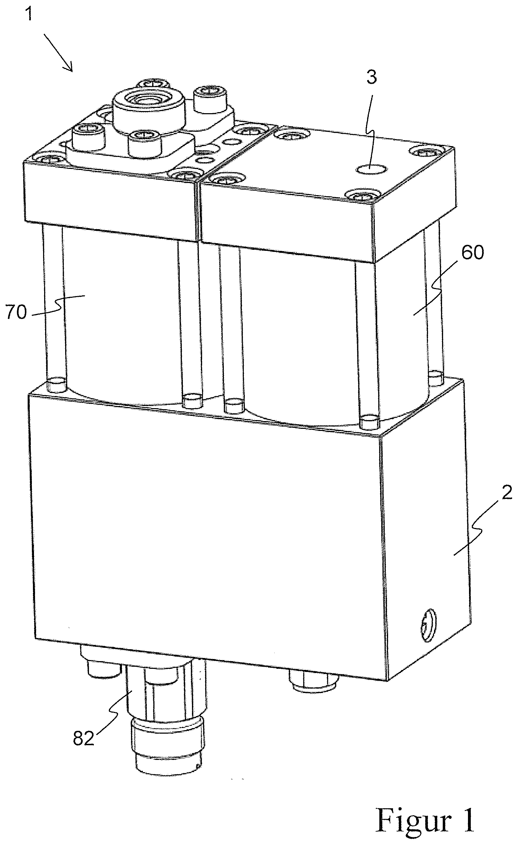

**Figur 1** zeigt eine Perspektivaufsicht auf einen Aktuator 1, welcher z.B. für die Steuerung von Ventilen verwendet werden kann. Der Aktuator 1 wird pneumatisch, also mit Druckluft, betrieben; die nötige Druckluft kann dem Aktuator 1 über eine Zuführungsöffnung 3 zugeführt werden. Die aus der Druckluft gewonnene Aktuator-Kraft wird über eine Schnittstelle 82 an den Abnehmer (z. B. ein Ventil) - beispielsweise über eine Kolbenstange (nicht gezeigt) - übertragen.

Das Gehäuse 2 des gezeigten Aktuators 1 ist im Wesentlichen quaderförmig ausgebildet und weist eine erste Zylindereinheit 60 und eine zweite Zylindereinheit 70 auf, welche nebeneinander angeordnet sind. Jede der gezeigten Zylindereinheiten weist im Inneren Zylinder (nicht gezeigt) zur Aufnahme von Kolben (nicht gezeigt) auf. Die gezeigten Zylindereinheiten sind gleich gross ausgebildet und weisen jeweils einen im Wesentlichen quadratischen Grundriss auf. Weil die beiden Zylindereinheiten nebeneinander angeordnet sind, weist das Gehäuse 2 in einem Querschnitt also ein Seitenverhältnis von ca. 2:1 auf.

An einer Unterseite des Gehäuses 2 des gezeigten Aktuators 1, ungefähr in der Mitte einer Unterseite der zweiten Zylindereinheit 70, ist ein als Bonnet ausgebildete Schnittstelle 82 angeordnet, an welcher der Aktuator 1 an ein anderes Bauteil (z.B. ein Ventil, nicht gezeigt) anbracht werden kann. Der Winkel, in welchem der gezeigte, nicht rotations-symmetrische Aktuator 1 an ein anderes Bauteil angebracht wird - und somit die Richtung in welche die Asymmetrie der erste Zylindereinheit 60 zeigt - kann frei wählbar sein und so an die Gegebenheiten des Einsatzortes flexibel anpassbar sein.

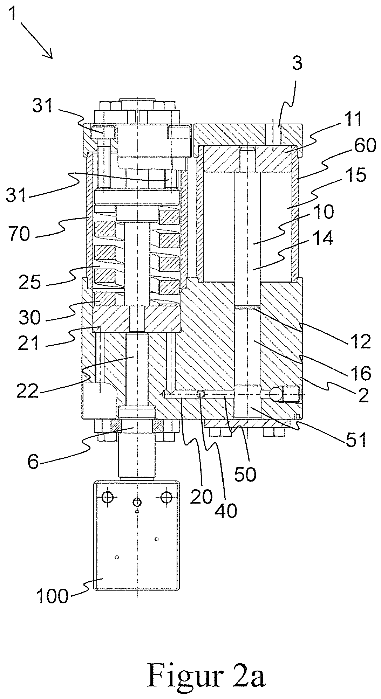

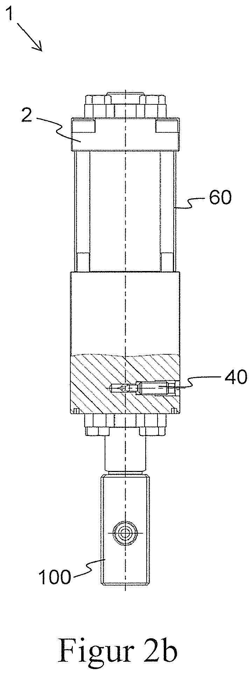

**Figur 2a und 2b** zeigen jeweils einen (teilweisen) Querschnitt durch einen Aktuator 1 aufweisend ein Gehäuse 2 mit Zuführungsöffnung 3 zur Zuführung von Druckluft, sowie ein an den Aktuator 1 angeschlossenes Ventil 100. Der gezeigte Aktuator 1 weist einen Druckverstärker 10 auf, welcher einen ersten Kolben 11 und einen zweiten Kolben 12 aufweist. Die beiden Kolben können - wie in Figur 2a und 2b gezeigt - über eine gemeinsame Kolbenstange 14 miteinander gekoppelt sein. Der erste Kolben 11 ist in einem ersten Zylinder 15 und der zweite Kolben 12 ist in einem zweiten Zylinder 16 angeordnet, in welchen die Kolben jeweils einen ersten Teil von einem zweiten Teil separieren. Die beiden Zylinder 15, 16 können - wie in Figur 2a und 2b gezeigt - in einer ersten Zylindereinheit 60 des Gehäuses 2 zueinander koaxial angeordnet sein. Der gezeigte Aktuator 1 weist zudem einen Kraftverstärker 20 auf, welcher den zweiten Kolben 12 und einen dritten Kolben 21 aufweist. Der zweite Kolben 12 und der dritte Kolben 21 können - wie in Figur 2a gezeigt - über eine Leitung 50 miteinander verbunden sein, welche ein Übertragungsmedium (z.B. Gas oder Hydraulikflüssigkeit) aufweisen kann. Der dritte Kolben 21 wird durch eine Feder 30 vorgespannt, welche - wie in Figur 2a gezeigt - beide gemeinsam in einem dritten Zylinder 25 einer zweiten Zylindereinheit 70 angeordnet sein können. Die Feder 30 kann - wie in Figur 2a gezeigt - durch Federvorspannelemente 31, welche in Figur 2a beispielshaft als Schrauben ausgebildet sind, von denen zwei sichtbar sind, vorgespannt werden.

Wenn dem Aktuator 1 über die Zuführungsöffnung 3 Druckluft zugeführt wird, wirkt die Druckluft gegen den ersten Kolben 11. Der Druck wird von dem Druckverstärker 10 von dem ersten Kolben 11 auf den zweiten Kolben 12 übertragen und dabei verstärkt. Die am zweiten Kolben 12 entstehende Kraft wird über den Kraftverstärker 20 von dem zweiten Kolben 12 auf den dritter Kolben 21 übertragen und dabei verstärkt. Die verstärkte Kraft drückt gegen die Vorspannungskraft der Feder 30 und - falls die Kraft gross genug ist - überwindet diese, so dass der dritte Kolben 21 bewegt wird. Der dritte Kolben 21 kann - wie in Figur 2a gezeigt - mit einer Kolbenstange 22 gekoppelt sein, welche mit dem dritten Kolben 21 mitbewegt wird und zum Beispiel mit einem Ventil 100 gekoppelt sein kann. So kann durch Beaufschlagung mit Druckluft ein Ventil geöffnet (ATO-Ventile) oder geschlossen (ATC-Ventile) werden. In dem in Figur 2a gezeigten Aktuator 1 wird der dritte Kolben 21 von der Ausgangsöffnung 6 wegbewegt und ist für ein ATO-Ventil ausgelegt.

Verkehrsübliche Druckluftnetzte weisen oft nur einen geringen Druck (z. B. zwischen 4 *bar* und *10 bar*) auf. Durch die Verwendung der doppelten Verstärkung durch den Druckverstärker 10 und den Kraftverstärker 20, kann dieser geringe Anregungsdruck jedoch ausreichen, um auch mit relativ kleinen Kolben eine grosse Kraft zu erreichen.

Die folgende - *idealisierte* - Rechnung basiert auf dem Gesetz, dass Druck einer ausgeübten Kraft pro Fläche entspricht. Durch die zugeführte Druckluft wirkt ein erster Druck $\rho_1$ gegen den ersten Kolben 11 mit der Fläche $A_1$, also mit einer ersten Kraft $F_1 = \rho_1 \cdot A_1$. Der Druckübersetzter 10 überträgt diese erste Kraft auf den zweiten Kolben 12 mit der Fläche $A_2$, an der sich ein

zweiter Druck $\rho_2 = \dfrac{F_2}{A_2} = \dfrac{F_1}{A_2} = \rho_1 \cdot \dfrac{A_1}{A_2}$ ausbildet.

Der pneumatische Kraftverstärker 20 überträgt diesen Druck auf den dritten Kolben 21, an dem dann eine dritte

Kraft $F_3 = \rho_3 \cdot A_3 = \rho_2 \cdot A_3 = \rho_1 \cdot \dfrac{A_1 \cdot A_3}{A_2}$ wirkt.

Wenn der in Figur 2a und 2b dargestellte Aktuator 1 zum Beispiel Kolben mit den Flächen $A_1 = A_2 = 20\ cm^2$ und $A_3 = 2\ cm^2$ aufweist und mit einem Druckluftnetz mit 6,5 *bar* betrieben wird, kann eine Kraft von

bis zu $F_3 = 6{,}5\ bar \cdot \dfrac{20\ cm^2 \cdot 20\ cm^2}{2\ cm^2} = 13\ kN$ erreicht werden. Mit einem solchen Aktuator kann es möglich sein, auch Ventile ohne Pilotfunktion in Hochdrucksystemen (z.B. mit einem Druck zwischen *700 bar* und *5'000 bar*) zu steuern.

Der Aktuator 1 kann - wie in Figur 2a gezeigt - eine Drossel 40 zur Justierung der Geschwindigkeit einer Kraftübertragung aufweisen. Durch die Drossel 40 kann z. B. ein Durchgang in einer Leitung 50 des Kraftverstärkers 20 verengt bzw. erweitert werden. Dafür kann die Drossel 40 - wie in Figur 2a gezeigt - in einer Leitung 50 des Kraftverstärkers 20 angeordnet sein. Die Justierung kann z. B. durch einen, von aussen zugänglichen Schraubkopf vornehmbar sein.

Die erste Zylindereinheit 60 kann - wie in Figur 2a gezeigt - eine Endlagendämpfung am Ende des zweiten Zylinders 16 aufweisen. Dazu weist der zweite Zylinder 16 in einem Endbereich 51 einen leicht grösseren Durchmesser auf. Nachdem der zweite Kolben 12 die Verbindungsstelle zur Leitung 50 passiert hat, taucht er in diesen Endbereich 51 ein, wobei das im Endbereich 51 vorhandene Übertragungsmedium nur noch durch einen schmalen Spalt zur Leitung 50 hin entweichen kann, und so die Bewegung des zweiten Kolbens 12 gebremst wird.

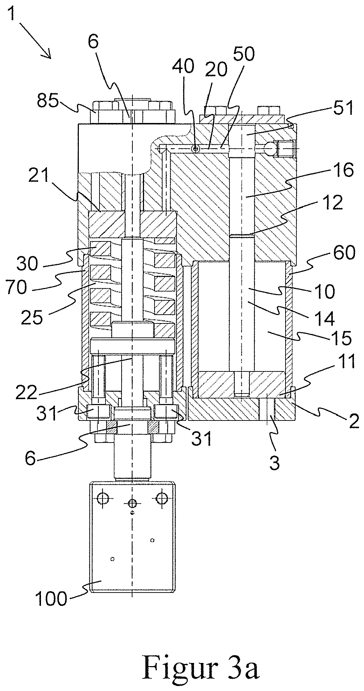

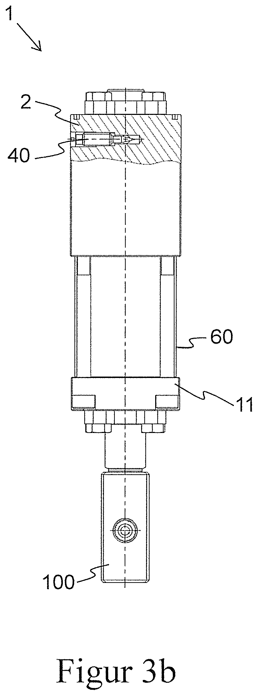

**Figur 3a und 3b** zeigen je einen (teilweisen) Querschnitt durch einen weiteren Aktuator 1 sowie ein an den Aktuator 1 angeschlossenes Ventil 100. Dieser ist ähnlich wie der in Figur 2a und 2b gezeigte Aktuator ausgebildet, ist aber im Unterschied zu diesem für ein ATC-Ventil ausgelegt. Insbesondere kann das Gehäuse 2 der beiden Aktuatoren identisch sein. Das gezeigte Gehäuse 2 weist insgesamt zwei, sich gegenüberliegende potentielle Ausgangsöffnungen 6 auf, durch welche Kraft über eine Kolbenstange 22 übertragen werden kann. Je nachdem durch welche der Ausgangsöffnungen 6 die Kolbenstange 22 die Kraft überträgt, kann das dasselbe Gehäuse also für Aktuator für ein ATO-Ventil oder für einen Aktuator für ein ATC-Ventil verwendet werden. Eine nicht genutzte Ausgangsöffnung 6 kann verschlossen werden, zum Beispiel - wie in Figur 3a gezeigt - durch ein weiteres Bauteil 85. Das weitere Bauteil 85 könnte z.B. eine Endlagendämpfung (nicht gezeigt) aufweisen, welche dazu eingerichtet sein kann, auf die Kolbenstange 22 zu wirken.

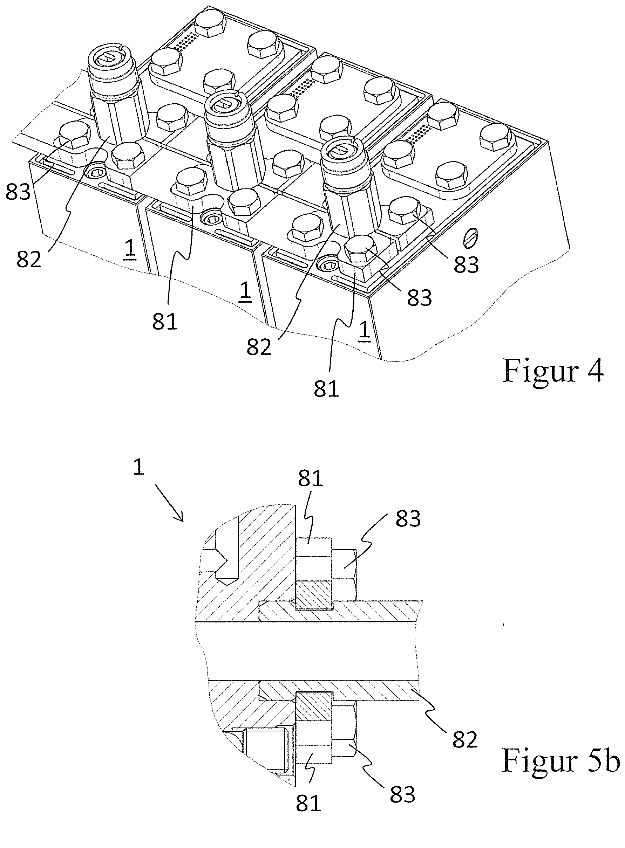

**Figur 4** zeigt drei Aktuatoren 1, welche fest miteinander verbunden sind. Z.B. können mehrere Aktuatoren 1 auf einer gemeinsamen Montageschiene (nicht gezeigt) montiert und dadurch miteinander verbunden werden.

In dem in Figur 4 gezeigten Beispiel sind je zwei Aktuatoren 1 durch Halteplatten 81 miteinander verbunden, wobei die Halteplatten 81 mit Schrauben 83 an je zwei Aktuatoren 1 montierbar sein können. In dem gezeigten Beispiel ist ein erster Aktuator 1 mit einer ersten Halteplatte 81 mit einem zweiten Aktuator 1; und der zweite Aktuator 1 mit einer zweiten Halteplatte 81 mit einem dritten Aktuator 1 fest verbunden. Dadurch sind alle drei gezeigten Aktuatoren 1 fest miteinander verbunden.

Die Haltplatten 81 und die Schrauben 83 können zudem als Feststellmechanismus für die, im gezeigten Beispiel als Bonnets ausgebildeten, Schnittstellen 82 eingerichtet sein.

Die in diesem Beispiel gezeigten Aktuatoren 1 sind im Wesentlichen quaderförmig ausgebildet und können platzsparend nebeneinander angeordnet werden.

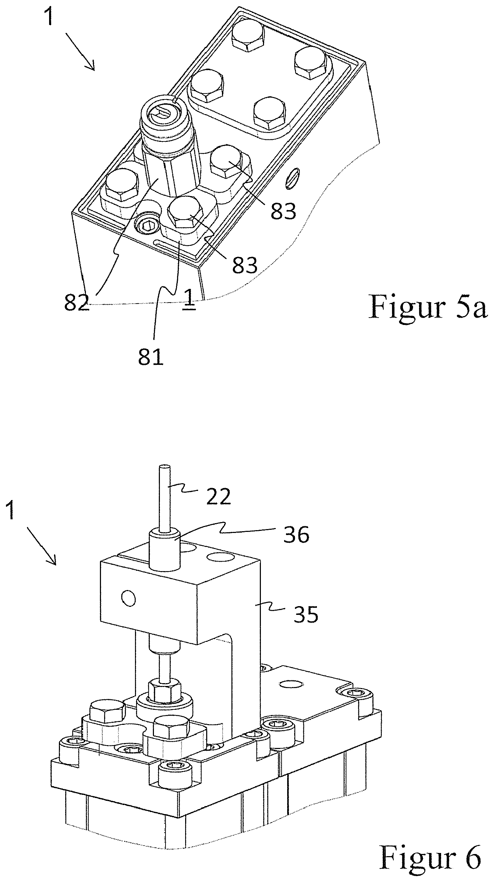

**Figur 5a** zeigt eine als Bonnet ausgebildete Schnittstelle 82, an welcher der Aktuator 1 an ein anderes Bauteil (z.B. ein Ventil, nicht gezeigt) anbracht werden kann. Die Schnittstelle 82 kann so ausgebildet sein, dass der Aktuator 1 über die Schnittstelle 82 drehbar an dem anderen Bauteil montiert werden kann. Der Aktuator 1 kann also durch eine Drehung in eine gewünschte Drehposition gebracht werden.

Ein drehbar montierbarer Aktuator 1 kann einen Feststellmechanismus aufweisen, durch welchen die Drehbarkeit verhindert werden kann, z. B. um den Aktuator 1 in einer gewünschten Drehposition zu fixieren.

In dem gezeigten Beispiel weist der Aktuator 1 einen Feststellmechanismus auf, welcher Halteplatten 81 und Schrauben 83 aufweist. Wie in dem Querschnitt von **Figur 5b** gezeigt, kann eine Halteplatte 81 so angeordnet sein, dass sie einen Teil der Schnittstelle 82 einklemmen kann, um so eine Drehbewegung der Schnittstelle 82 kraftschlüssig zu blockieren. Wie in Figur 5b dargestellt, kann eine, als Bonnet ausgebildete Schnittstelle 82 eine Nut aufweisen, in welche eine Halteplatte 81 eingreifen kann. Die Konfiguration kann - wie in dem Beispiel von Figur 5b gezeigt - so angeordnet sein, dass durch ein Anziehen von Schrauben 83 die Halteplatte 81 gegen eine Seitenwand der Nut drückt und so die Nut - und damit die Schnittstelle 82 - festklemmt.

**Figur 6** zeigt einen Aktuator 1 mit Sensor. In dem gezeigten Beispiel weist der Aktuator 1 ein Sensorgehäuse 36 und/oder einen Sensorhalter 35 auf, in oder an welchem ein Sensor (nicht im Detail gezeigt) angeordnet ist. Das Sensorgehäuse 36 resp. der Sensorhalter 35 kann Teil des Gehäuses des Aktuators sein. Der gezeigte Sensorhalter 35 weist eine Ausnehmung auf, in welche -wie gezeigt- die Kolbenstange 22 eingeführt werden kann. Der Sensor der gezeigten Konfiguration ist dazu eingerichtet, die Position der Kolbenstange 22 zu erfassen. Wenn die Kolbenstange 22 mit einem Ventilverschluss (nicht gezeigt) gekoppelt ist, kann dadurch auf die Stellung des Ventilverschlusses und damit auf einen Ventilzustand geschlossen werden.

Zum Beispiel kann der Sensor als Mikroschalter ausgebildet sein, welcher dazu eingerichtet ist Vertiefungen (nicht gezeigt) in der Kolbenstange 22 abzutasten. Die Kolbenstange 22 kann beispielsweise zwei solcher Vertiefungen aufweisen, wobei eine erste Vertiefung bei einer ersten Endlage an der Ausnehmung des Sensorgehäuses 35 angeordnet ist, und eine zweite Vertiefung bei einer zweiten Endlage an der Ausnehmung des Sensorgehäuses 35 angeordnet ist. Ein, an der Ausnehmung angeordneter Mikroschalter kann so die beiden Endlagen der Kolbenstange 22 erfassen und Rückschlüsse auf die Ventilstellung ermöglichen.

**Patentansprüche**

1.   Ventilaktuator (1), aufweisend:

  - ein Gehäuse (2), aufweisend

    ○ eine Zuführungsöffnung (3) zur Zuführung von Druckluft; und

  - einen Druckverstärker (10), aufweisend

    ○ einen ersten Kolben (11), und
    ○ einen zweiten Kolben (12);

  - einen Kraftverstärker (20), aufweisend

    ○ den zweiten Kolben (12) und
    ○ einen dritten Kolben (21); sowie

  - eine den dritten Kolben (21) vorspannende Feder (30),

  wobei der Ventilaktuator dazu eingerichtet ist, dass, wenn Druckluft durch die Zuführungsöffnung (3) zugeführt wird,

    - die Druckluft auf den ersten Kolben (11) wirkt;
    - der Druckverstärker (10) Druck von dem ersten Kolben (11) auf den zweiten Kolben (12) überträgt und dabei verstärkt;
    - der Kraftverstärker (20) Kraft von dem zweiten Kolben (12) auf den dritten Kolben (21) überträgt und dabei verstärkt; und
- die verstärkte Kraft die Vorspannungskraft der Feder (30) überwindet, so dass der dritte Kolben (21) bewegt wird.

2. Ventilaktuator (1) gemäss einem der vorstehenden Ansprüche, wobei der Kraftverstärker (20) ein hydraulischer Kraftverstärker ist.

3. Ventilaktuator (1) gemäss einem der vorstehenden Ansprüche, aufweisend eine Leitung (50) zur Aufnahme einer Hydraulikflüssigkeit zwischen dem zweiten Kolben (12) und dem dritten Kolben (21).

4. Ventilaktuator (1) gemäss einem der vorstehenden Ansprüche, aufweisend eine an den dritten Kolben (21) gekoppelte Kolbenstange (22).

5. Ventilaktuator (1) gemäss einem der vorstehenden Ansprüche, wobei die Vorspannung der Feder (30) mittels eines Vorspannungselementes (31) justierbar ist, insbesondere wobei das Vorspannelement (31) als Schraube ausgebildet ist.

6. Ventilaktuator (1) gemäss einem der vorstehenden Ansprüche, aufweisend eine Drossel (40) zur Justierung der Geschwindigkeit einer Kraftübertragung, insbesondere einer hydraulischen Kraftübertragung, auf den dritten Kolben (21).

7. Ventilaktuator (1) gemäss einem der vorstehenden Ansprüche, aufweisend eine Endlagendämpfung.

8. Ventilaktuator (1) gemäss einem der vorstehenden Ansprüche, aufweisend einen Sensor zur Erfassung von Informationen bezüglich einer Position der Feder (30) und/oder des dritten Kolbens (21), insbesondere wobei der Sensor (32) zur Endlagenabfrage eingerichtet ist.

9. Ventilaktuator (1) gemäss einem der vorstehenden Ansprüche, wobei das Gehäuse (2) im Wesentlichen quaderförmig ausgebildet ist.

10. Ventilaktuator (1) gemäss einem der vorstehenden Ansprüche, aufweisend
eine Schnittstelle (82), an welcher der Aktuator (1) an ein anderes Bauteil angebracht werden kann, wobei die Schnittstelle (82) so ausgebildet ist, dass der Aktuator (1) nach dem Anbringen drehbar ist; und
einen Feststellmechanismus, welcher dazu eingerichtet ist, aktiviert zu werden und, wenn der Aktuator (1) an der Schnittstelle (82) an einem anderen Bauteil angebracht ist, nach Aktivierung eine Drehung zu verhindern.

11. Set bestehend aus einem ersten Ventilaktuator (1) und einem zweiten Ventilaktuator (1), beide gemäss einem der vorstehenden Ansprüche, wobei der erste und der zweite Ventilaktuator (1) Federn (30) mit unterschiedlichen Federkonstanten aufweisen.

12. Gehäuse (2) für einen Ventilaktuator (1), insbesondere für einen Ventilaktuator (1) gemäss einem der Ansprüche 1 bis 10, wobei das Gehäuse (2) dazu eingerichtet ist

   - sowohl in einem Ventilaktuator für ein air-to-open ("ATO") Ventil
   - als auch in einem Ventilaktuator für ein air-to-close ("ATC") Ventil verbaut zu werden.

13. Verwendung einer hydraulischen Kraftverstärkung in einem pneumatisch aktivierbaren Ventilaktuator (1).

14. Verwendung gemäss dem Anspruch 13, wobei der Ventilaktuator (1) mit wasserstoffhaltiger Druckluft betrieben wird.

15. Verwendung eines pneumatisch aktivierbaren Ventilaktuators (1) mit einer hydraulischen Kraftverstärkung für die Schaltung eines direktgesteuerten Ventils (100).

Figur 1

Figur 2a

Figur 2b

Figur 3a

Figur 3b

Figur 4

Figur 5b

Figur 5a

Figur 6

Europäisches
Patentamt

European
Patent Office

Office européen
des brevets

**EUROPÄISCHER RECHERCHENBERICHT**

Nummer der Anmeldung

EP 17 19 6178

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 82/02423 A1 (CAMTORC LTD [GB]; MCCORMACK WALLACE [GB]; BOWDITCH DAVID [GB]) 22. Juli 1982 (1982-07-22) * Seite 5, Zeile 21 - Seite 12, Zeile 18p; Abbildungen 1-3 * ----- | 1-15 | INV. F15B15/20 F15B11/032 F15B21/00 F15B7/00 F15B11/072 F16K31/122 |
| X | US 4 043 533 A (COWLEY JOHN M) 23. August 1977 (1977-08-23) * Spalte 1, Zeile 59 - Spalte 6, Zeile 39; Abbildung 1 * ----- | 1-15 | |
| X | EP 1 643 137 A2 (BTM CORP [US]) 5. April 2006 (2006-04-05) | 12 | |
| A | * das ganze Dokument * ----- | 1-11, 13-15 | |

| | | | RECHERCHIERTE SACHGEBIETE (IPC) |
|---|---|---|---|
| | | | F15B F16K |

Der vorliegende Recherchenbericht wurde für alle Patentansprüche erstellt

| Recherchenort | Abschlußdatum der Recherche | Prüfer |
|---|---|---|
| München | 9. April 2018 | Bindreiff, Romain |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 19 6178

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2018

| Im Recherchenbericht angeführtes Patentdokument | Datum der Veröffentlichung | Mitglied(er) der Patentfamilie | Datum der Veröffentlichung |
|---|---|---|---|
| WO 8202423 A1 | 22-07-1982 | AU 7939982 A <br> EP 0069128 A1 <br> WO 8202423 A1 | 02-08-1982 <br> 12-01-1983 <br> 22-07-1982 |
| US 4043533 A | 23-08-1977 | KEINE | |
| EP 1643137 A2 | 05-04-2006 | CA 2521701 A1 <br> EP 1643137 A2 <br> US 2005144944 A1 | 29-03-2006 <br> 05-04-2006 <br> 07-07-2005 |

EPO FORM P0461

Für nähere Einzelheiten zu diesem Anhang : siehe Amtsblatt des Europäischen Patentamts, Nr.12/82